# EUROPEAN PATENT APPLICATION

(11) **EP 1 686 524 A1**
(43) Date of publication of application: **02.08.2006**
(21) Application number: 05290025.5
(22) Date of filing: 05.01.2005
(51) Int. Cl.: G06Q 10/00

(54) **A method for network-assisted communication, a telecommunication service, a server, a terminal device, and a computer software product therefor**

(71) Applicant: ALCATEL, 75008 Paris (FR)
(72) Inventor: Szabo, Peter, Dr., 75180 Pforzheim (DE); Rössler, Horst, 70794 Filderstadt (DE); Hoche, Michael Walter, Dr., 88090 Immenstaad (DE)
(74) Representative: Rausch, Gabriele

(57) **Abstract**

The present invention relates to a network-assisted communication method comprising: establishing a communication in a telecommunication network; capturing an identified communication contribution; and presenting and storing said communication contribution, associating the established communication with the captured communication contribution, and associating references to related communications to the established communication.

The invention further relates to a telecommunication service, a server, a terminal device, and a computer software product therefor.

## Description

The present invention relates to a method for network-assisted integrated communication. The invention further relates to a telecommunication service, a server, a terminal device, and a computer software product therefor.

The volume of information in personal communication is increasing rapidly. Examples of such stored information include e-mail messages, word-processed and text documents, contact management tools, calendars, wireless voice communication and fixed voice communication. But the precision and usability of information management and assistance technology has not kept pace. Most communication is not assisted.

Communication Thread Management is known from messenger applications and e-mail clients. Some e-mail clients even have search and archive capabilities.

The assistance suffers from fundamental flaws: Organization and structuring and inter-linking mechanisms as well as search facilities.

Search facilities often result in either vast numbers of documents being returned, or, no documents being returned. Further, these techniques are able only to retrieve documents that individually exactly meet the search criteria, i.e. the search is not intelligent.

US patent application No. 2004/0153456 A1 relates to electronic documents, and more particularly to a method for visualizing the relationships among, and retrieving one or more groups of documents satisfying a user-defined criterion or set of criteria. This patent application discloses a method of organizing information. The method comprises providing a visualization of actor communications in the context of one or more discussions, a discussion including at least one actor and at least one documented communication.

In view of the cited patent application the structuring of gathered communication information within multiple communications (using multiple communication media) remains an open problem.

It is the intention to provide a uniform concept, i.e. a functional extension that is compatible with multiple communication media, for providing "glue" between multiple media communication, i.e. a technically simple seamless integration of multiple communication media.

Currently complex communication scenarios like group communication and call forwarding are unstructured. Identification of communication threads (subjects) is not supported. Multiple media do not relate (embed) very well. Usually links between several media and presentations are maintained in mind.

Typically a communication channel like a voice medium is established for a session but the content and the information about the intention as well as the references between communications and content are maintained within the participant's mind.

Establishing a common communication thread and associating an optional context to any communication tackle this problem. The context might be a kind of topic description like a subject, an ontology description, a graphic, an audio sequence, a video sequence or any combination.

In other words a data structure representing associated context information is added to a communication. The context might be a subject, an ontology description, a graphic, an audio sequence, a video sequence, or any combination. This context is treated as a descriptor to maintain a communication thread and to interlink multiple communication sessions, media and paths.

The problem is solved by a network-assisted communication method that establishes a communication in a telecommunication network; captures an identified communication contribution; and presents and stores said communication contribution, where the established communication is associated with the captured communication contribution, and where references to related communications to the established communication are associated, too.

The problem is solved inter alia by a telecommunication service for network-assisted communication, where the service comprising capturing means for capturing and storing an identified communication contribution for an established communication in a telecommunication network and presentation means for presenting said communication contribution, where the service further comprising organization means for associating the established communication with the captured communication contribution, and associating references to related communications to the established communication. Correspondingly a server in a telecommunication network solves the problem.

A terminal device in a telecommunication network providing a network-assisted communication, the terminal device comprising capturing means for capturing an identified communication contribution for an established communication and presentation means for presenting said communication contribution, and further comprising organization means for associating the established communication with the captured communication contribution, associating references to related communications to the established communication, and retrieval means for retrieving communication information using associated communication contributions, will solve the problem too.

Preferably and advantageously the solution is realized as a computer software product.

Accordingly, it is an object and advantage of the present invention to add a context descriptor to any communication allowing a seamless integration of multiple media. This allows organizing and simplifies communication.

Another advantage of the present invention is that the combination with billing and authentication services is seamless

A further advantage of the present invention is that the simplicity and intuitivity will likely be accepted by end-users.

These and many other objects and advantages of the present invention will become apparent to those of ordinary skill in the art from a consideration of the drawings, ensuing description, and the illustrated calling scenarios.

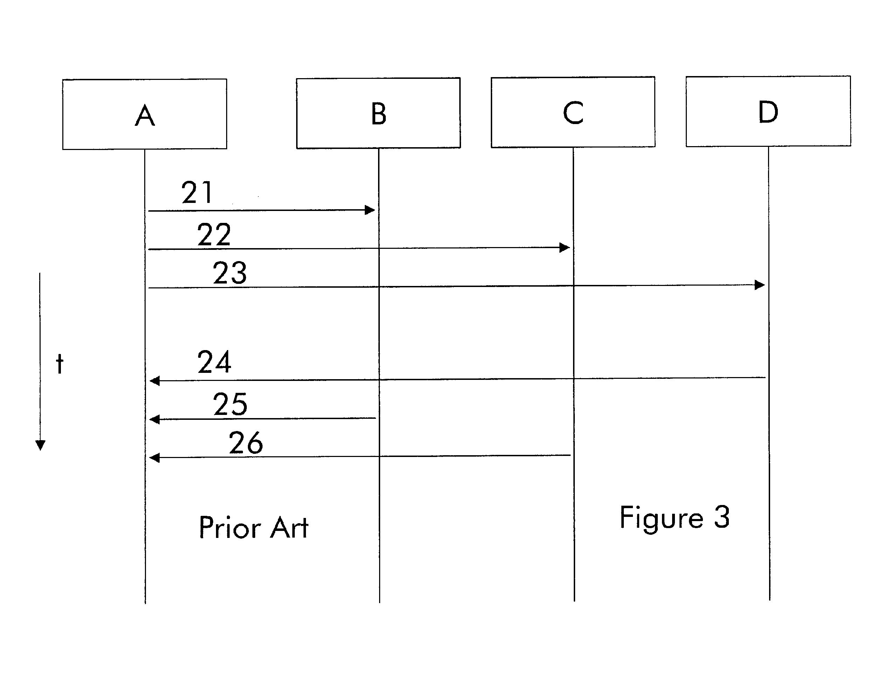

Figures 1 to 3 show message sequence charts illustrating deficiencies in prior art communication
Figures 4 and 5 are drawings of a decorated Kripke structure of a communication scenario for illustrating the method according to the invention.
Figure 6 is a drawing of an exemplary information model for realizing the method according to the invention.
Figure 7 is a drawing of an exemplary presentation of a communication thread at a terminal device according to the invention.

Currently there are asynchronous media like e-mail or news supporting discussion threads. For direct (synchronous) communication such a feature is usually not supported. Personal identifiers like names or voice commands or even technical identifiers like telephone numbers are used to establish communication. Usually there is no connection between several communication media beside sometimes a kind of application logic. The multiple communication channels like a voice call, e-mail, voice-mail, news postings, short message service, etc. are decoupled and unrelated. Similarly the devices are decoupled as far as there is no coordinating entity like in the e-mail example an Internet Message Access Protocol (IMAP) server.

IMAP is a method of accessing electronic mail or bulletin board messages that are kept on a (possibly shared) mail server. In other words, it permits a "client" e-mail program to access remote message stores as if they were local. For example, e-mail stored on an IMAP server can be manipulated from a desktop computer at home, a workstation at the office, and a notebook computer while traveling, without the need to transfer messages or files back and forth between these computers. This single source concept is not applicable to transient communication media like voice calls.

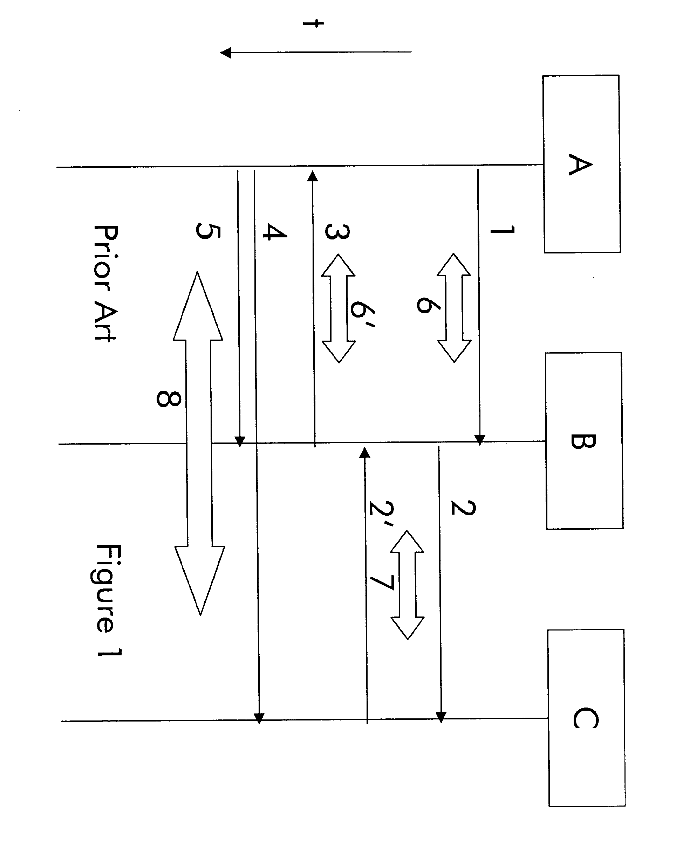

Figure 1 shows a daily life example for a three party A, B, and C communication. The downward arrow t illustrates the time line. The figure shows a message sequence chart of a simplified call scenario where the first party A calls 1 the second party B. A first communication 6 between A and B is established. That triggers the second party B to e-mail 2 to the third party C. The third party C replies 7 to this e-mail, hence establishing a second communication 7 between the second and the third party B and C. This causes the second party to continue 6' the first communication 6 by sending an SMS 3 to the first party A. Finally this causes the first party to establish 4 and 5 with the second and the third party a common videoconference 8.

As one picture, this scenario looks simple, but usually there are many communications in parallel and for a party, i.e. a user, it is sometimes confusing to which of a manifold of earlier communications the new communication is related.

In the case of e-mail there is usually a context, called subject, which allows referring to earlier e-mail correspondence. E-mail clients support usually linear time logic for e-mail correspondence that is called a thread, as news does. That means a user is enabled to list a history of related e-mails.

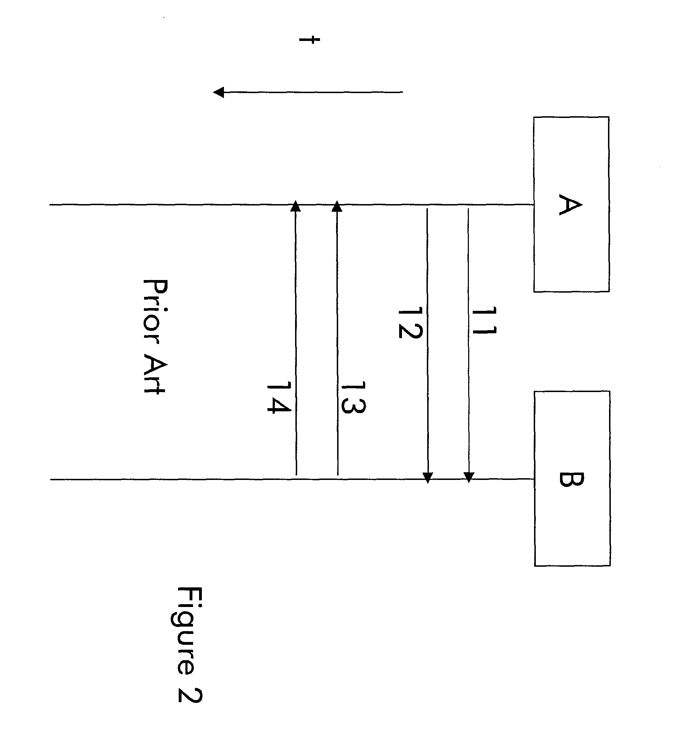

This is not the case for voice communication as illustrated in the second call scenario shown in figure 2. There the first party A tries to reach the second party B via a first voice call 11 leaving at the answering machine of the second party a first question. Then the first party A tries to reach the second party B via a second voice call 11 leaving at the answering machine of the second party a second question. The second party B answers 13 and 14 both questions shortly with "yes" and "no", e.g. via SMS, without referring or repeating the question. Since there is an ambiguity the first party A is completely lost and has to re-contact the second party B for whether the answer to the first question is yes or no.

The example shows the deficiency of a context-less dangling communication. This is usually done by refereeing or restating communication content, e.g. repeating the question.

The concept of context-free communication organization is known as sessions. This is a kind of bracket for communications such that the communication history forms a language, e.g. according to the following context-free grammar S -> (S)S|λ; where "S" is a variable, "(" and ")" are terminal symbols, the begin session and end session identifiers; and λ is the empty word. This concept is usually applied for coordinating non-preemptive communication resources although users tend to structure communications in mind similarly. E.g. in the first communication scenario the communication sequence 1, 2, 2', 3 could be read as the well-formed bracket expression "(())".

The third figure shows another ambiguous scenario. The first party A asks 21 the second party B, then asks 22 the third party C, and then asks 23 a further party D. Then the further party D replies 24, after that the second party 8 replies 25, and finally the third party C replies 26. The first party A has somehow to assign the replies to the inquiries, but how: Neither first send first reply assumption holds nor any other well-form assumption will work.

The first party A has to associate the first inquiry 21 with the second reply 25; the second inquiry 22 with the last reply 26, and the third inquiry with the first reply 24.

This scenario once more shows the necessity of coordinating communication assistance.

In order to discover the lack of information support the idea of Kripke structures is borrowed from temporal logic, i.e. a nondeterministic finite state machine, i.e. a graph consisting of states and transitions, whose states are labeled.

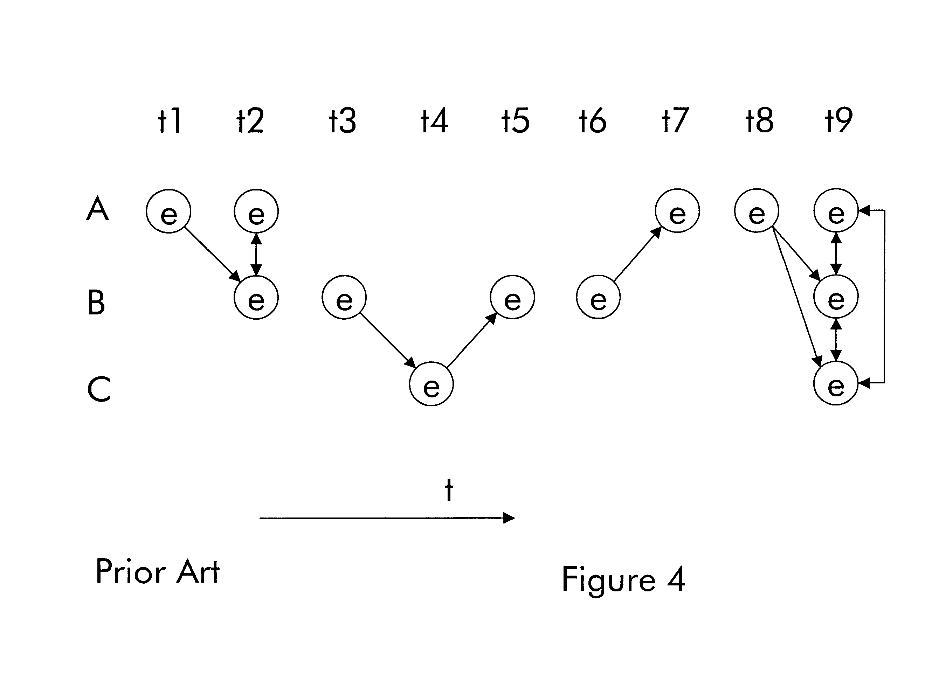

Such a structure is exemplarily shown in figure 4. The time line goes from left to right as illustrated by the right arrow t. Discrete time t1, t2, t3, ..., t9 is assumed, where t2 and t9 are in principle intervals for the duration of a synchronous (streamed) communication.

Events e, i.e. the states of the Kripke structure are arranged in a matrix where time is one dimension and the users or participants A, B, and C are the other dimension. At a first time t1 the first participant A initiates a communication with B, e.g. a phone call. At time t2 the second participant B is involved. This is illustrated by the causality, i.e. transition from the event at position (A, t1) to the events at position (B, t2). The communication is presented by the double arrow between the event at (B, t2) and (A, t2). At the next event e occurring in the depicted schedule, the event at position (B, t3), the second participant B informs the third participant C, e.g. via e-mail. At time t4 the third participant C receives the e-mail, depicted as event e at position (C, t4) and replies immediately. The third participant C replies immediately, as illustrated by the arrow from event e at position (C, t4) to the event e at position (B, t5). The next communication within the depicted time line is the SMS from the second party B to the first party A shown by the events e at the positions (B, t6) and (A, t7). The last communication, which is the video communication in the example above is initiated by the first party A and involves all parties A, B, and C. It is modeled by the events e at the positions (A, t8) initiating the conference communication, and the events e at position (A, t9), (B, t9) and (C, t9), showing the ongoing streamed information exchange.

From the figure one can observe that although concerning the same communication content, several communications are separately established. The graph is not connected.

One could allege that the second party could countervail this deficit but the information exchange, i.e. the transfer of the information that is the technical contribution of the communication equipment is modeled by the transitions, i.e. the arrows in the figure.

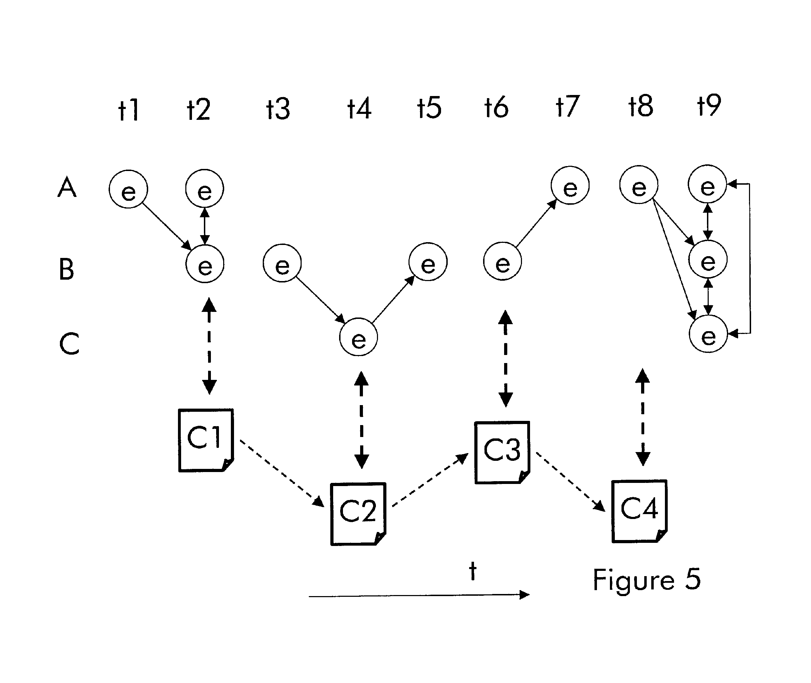

Figure 5 shows a solution out of that dilemma. For each communication, i.e. a connected component in the graph shown in figure 4, context information C1, C2, C3, and C4 is associated. The vertical dashed double arrows illustrate this. And this context information is linked to a line of gathered content, i.e. information gathered along time within communication. This link structure connects the single isolated communications and ensures a global communication survey.

The links enable for instance to refer within the videoconference at time t9 access context of the first communication, which is the telephone call at t2.

It should be noted that the context might even be the identical in all cases, e.g. the same subject. The structure allows also to retrieve information by navigating through the now common connected time line.

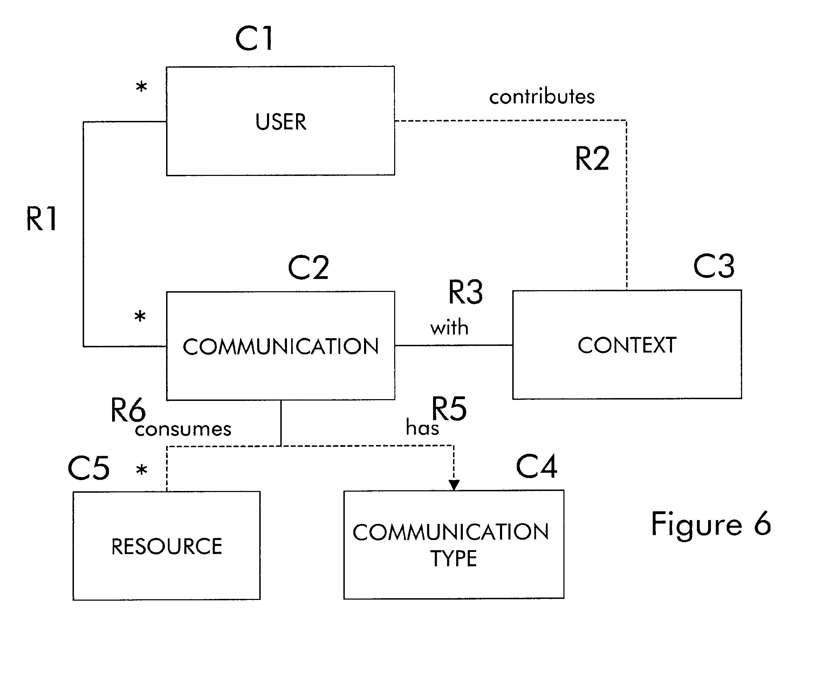

Figure 6 shows an appropriate class model. A first class C1, the user models a kind of participant or account. The second class C2 models a communication in a uniform manner, i.e. the activity of communicating; the activity of conveying information. The communication class would correspond in a telephone network with the database of call records. In the e-mail case this is a transferred e-mail itself. There is a third class C3 context, which is an aggregation, i.e. for each communication a user might instantiate a context. This is expressed by the relationship R1 between user class C1 and communication class C2. This relation is a many to many relation in order to cover multi-party conferences.

A user might contribute to a context which is expressed by the dashed line between the user class C1 and the context class C3. The corresponding relation contributes R2 might be also realized as an aggregation of the contributed content in an instance of the context class C3. Here the relation variant is shown to simplify the diagram.

The context class C3 is in relation or even strong relation with the communication class C2, expressed by the relation with R3. The communication class might have a communication type modeled by a corresponding has relation R5 with the communication type class C4. And a communication usually consumes resources which is expressed by the relation consumes R6 between the communication class C2 and the resource class C5. This relation is used in telephone systems for billing purposes. Instance of resources might be channels, lines, network capacity, processing time, as well as hardware resources like special equipment etc.

The relation consumes R6 means also a requirement for granting resources by a dispatcher.

Joining the relation with R3 and consumes R6 establishes a relation between the context class C3 and the resource class C5. This relation could be used to control via a context the resource grant. For instance suppose the following scenario: a party wants to establish a checkpoint for a meeting and proposes a location and time delivered via SMS to the invited persons with the question: "Do you come?" Thus context might be "the meeting checkpoint" and the invited parties could answer via SMS "yes" or "no". Usually the reply costs also money, but in this case the party wanting to establish a checkpoint might grant the usage of a resource for a reply SMS and to charge his/her account.

Another feature of this information model is that a user could be identified using the context. Sometimes people tend to forget names, addresses, telephone numbers etc. but usually the content of a communication is a well-established anchor. Thus seeking for a context via the relation with R3 a communication and the involved parties or users could be identified.

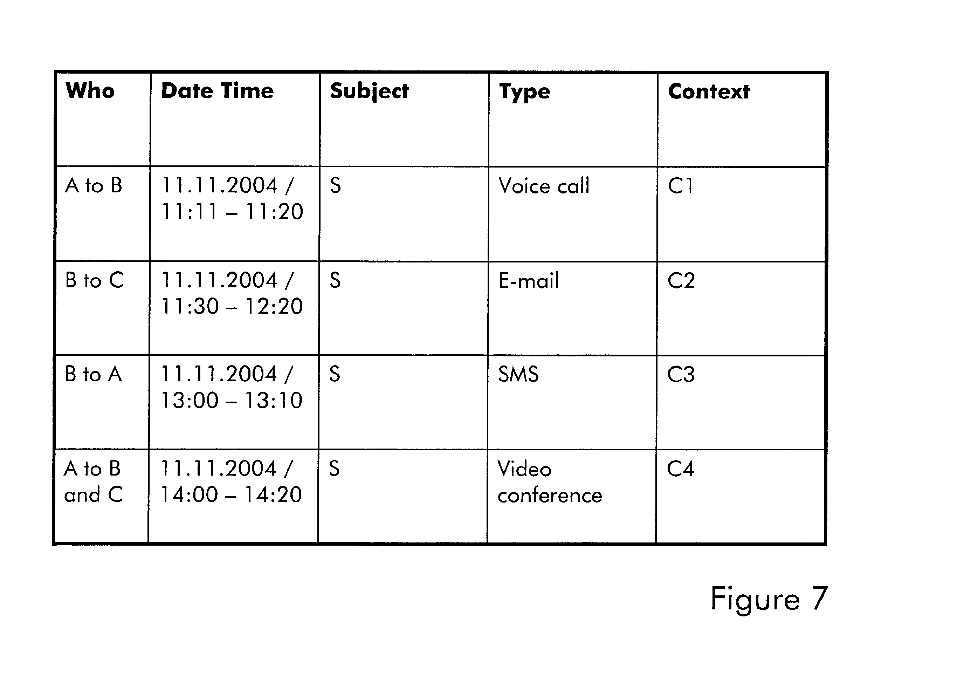

An exemplary user interface reflecting the capabilities of this information model is provided in figure 7. The figure shows a table with five columns:
Who, Date Time, Subject, Type, and Context. Each row corresponds to a communication where in the first column is the list of participants, in the second column is the time the communication is taking place, the third column mentions a shared (agreed) context, the subject, the fourth column mentions the communication type. This might be a media voice, e-mail, etc. or even terminal characteristics etc. enabling a participant to conclude about the communication capabilities and preferences of another communication party. The last field within a row lists the associated contexts, i.e. communication contributions made persistent and even transcribed or compiled into a machine readable format e.g. by a spoken context that is recognized by a speech recognizer and made persistent as text.

The presentation of contexts enables a communication about contexts. It also allows mining communication since the context forms a kind of excerpt from a communication. The subject, i.e. the agreed (topic) context is suited for billing, i.e. resource consumption.

For instance one could simply retrieve from the de-normalized joined relations which resources were required for what subject. Thus even billing could profit from the associations established by the method according to the invention.

As illustrated the method according to the invention provides a bunch of new value added services based on the new associations replacing the association between hardware/resource consumption and users.

The table shown in figure 7 shows only a thread for one subject S. Obviously this could be generalized to threads per user or per user group, or per subject group etc.

This user interface enables also an ergonomic information access and communication control. For example, when a user activates a certain thread an associated conference call may be initiated enabling the user to continue an ongoing discussion with involved persons about the specific subject. The user does not need to remember each individual person e.g. name, picture dealing with the subject and an integrated rich presence manager may organize the reachability for establishing the necessary connections.

Moreover the thread (as structured sequences of call history) may contain "hyperlinks" to other threads, for which the thread becomes a hyper-thread. The hypermedia structure generated by this kind of voice-context management provides significantly more support for automatic conference triggering and reuse of important annotations during a conference.

The thread itself might interlink several media, e.g. a voice call with a browser session.

Therefore the hyper-thread reflects (represents) also the communication status and content between different parties using multiple communication media / devices. The hyper-thread then could be automatically activated by a location, media availability or date/time so that the user does not need to remember the thread and the parties involved.

Furthermore it would be advantageous to bill such contexts, i.e. to itemize (break down) costs and / or billing by contexts and to enable context mining (for instance in order to account costs or to analyze media usage /user behavior).

The preferred realization as a web service could comprise an interface for logging a communication (of any type) and for retrieving a communication. E.g. when a communication is established the service is invoked for capturing contributions and for logging session information like participants, communication type, time, duration, media, etc. A contribution is captured, e.g. indicated by a user / participant or automatically by an intelligent extraction engine using a preconfigured (user) profile of interests. This extracted contribution, i.e. an excerpt or a resume of the whole communication or simply a topic descriptor is stored in relation with the communication session information. For the retrieval of information range queries filtering time intervals could be provided. A query capability relating to communication contributions should also be provided. And for a user's convenience a communication session initialization and management should also be provided.

Such an object structure could comprise a management object CommunicationContextManager for each user, the structure comprising several managed objects, e.g. Communication objects, Context objects or a USER object, i.e. the usual private yellow pages.

Since it is assumed that each user has his own (singleton) manager object, there is a method for synchronizing especially Context and Communication objects between manager object, i.e. synchronizing information about multiple treads.

Object : Communication Context Manager
Generic methods: create, destroy, update, and retrieve
Method: synchronize with (other Communication Context Manager)
Variable: Owner: User

Managed Object: Communication
MediaType : Enum ( Voice, Video, Text, SMS, MMS, ...)
TimeAttributes: start- end
Participants: set of USERs
Context: set of (related) Context objects
Resources: set of consumed RESSOURCES

Managed Object: Context
MediaType: Enum (Voice, Video, Text, SMS, MMS, ...)
Author: User
Content: Blob
Linked Contexts: set of (related) Context objects

Managed Object: User
Name:
Address:
Communication Contact Points:

This structure might be realized as a web service where the service interface specification in Web Service Description Language that is capable of handling messages for managing communications might look like

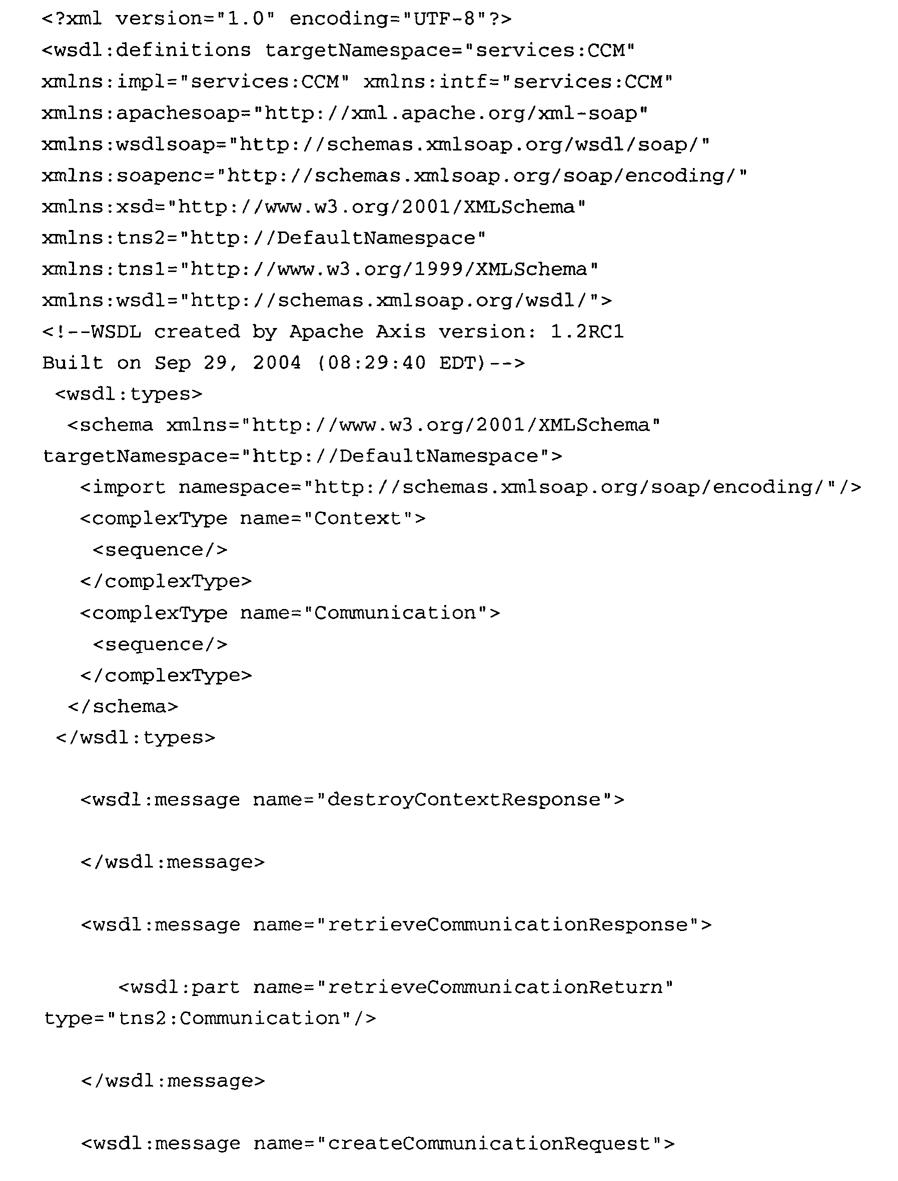

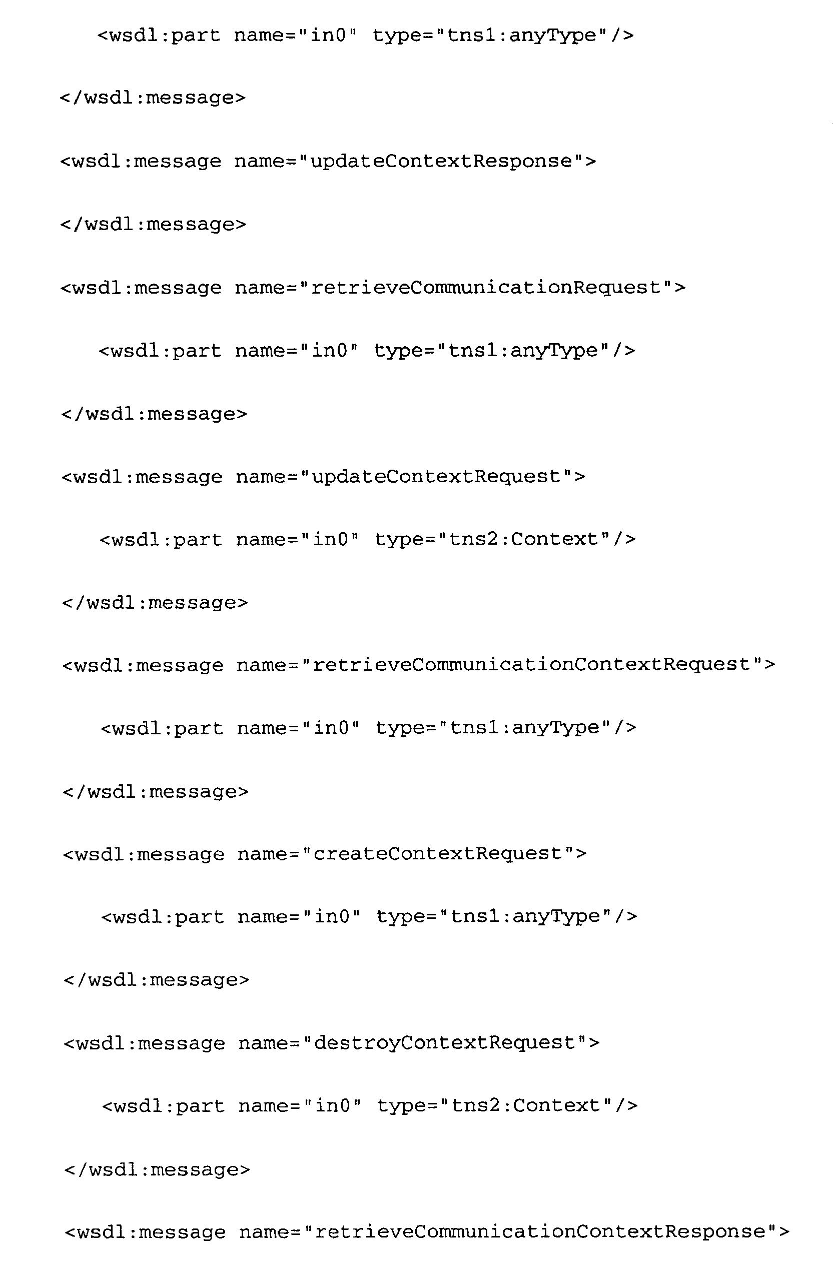

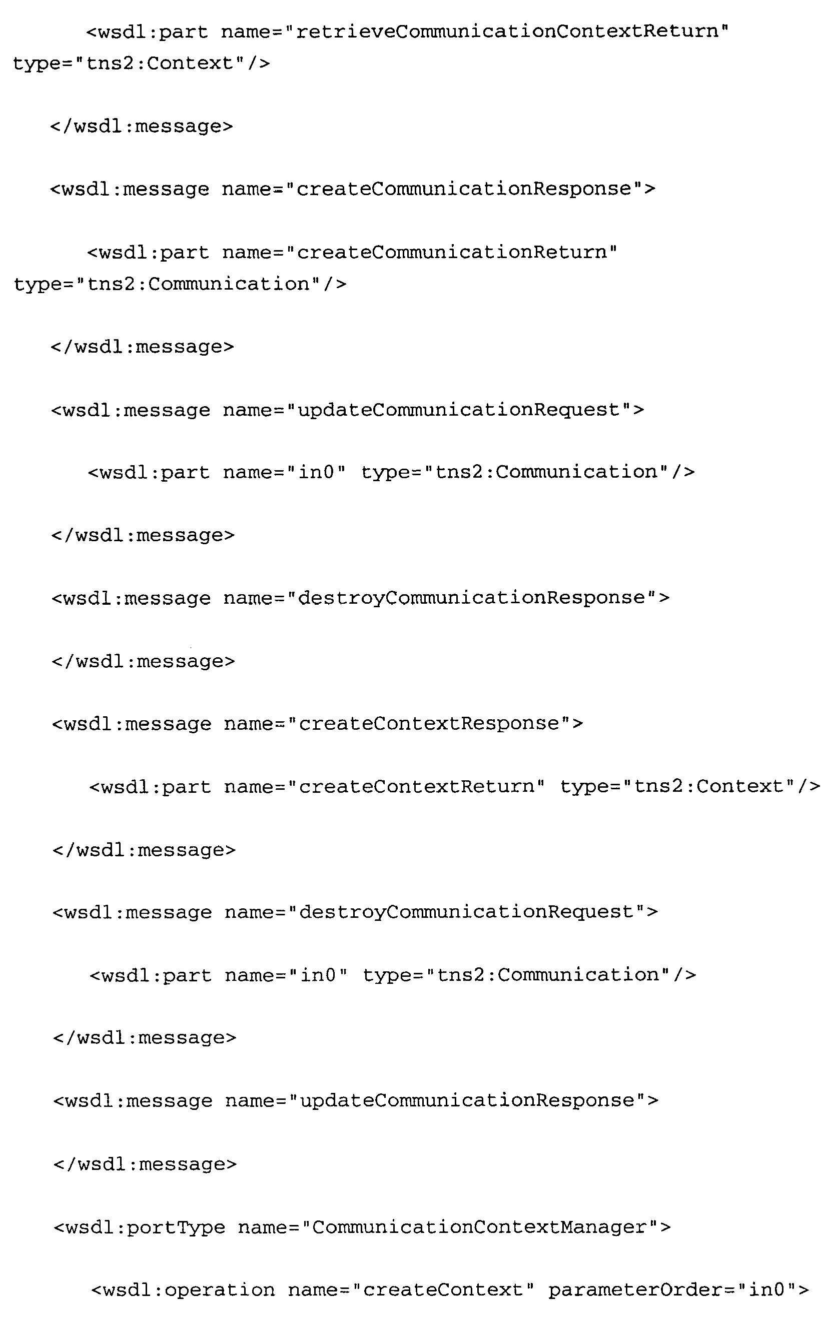

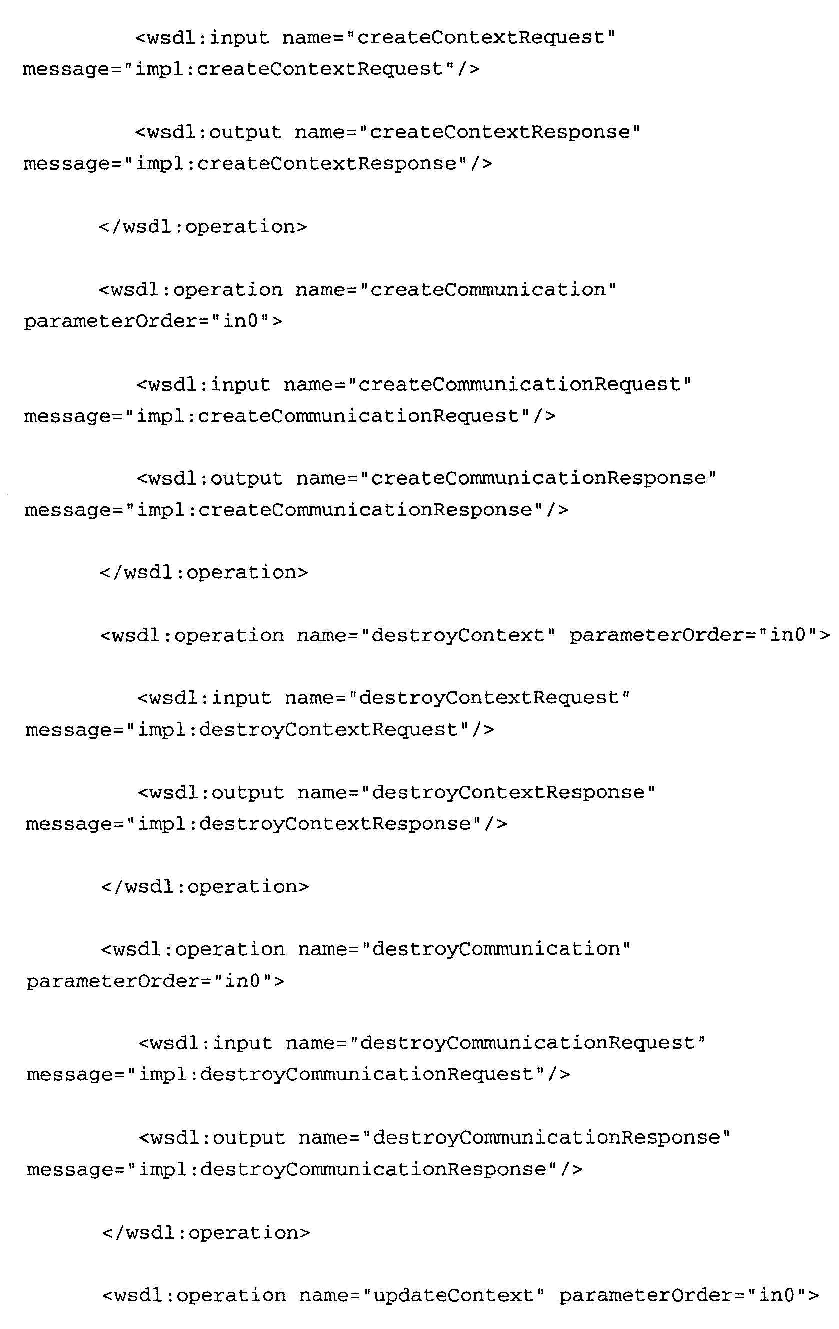

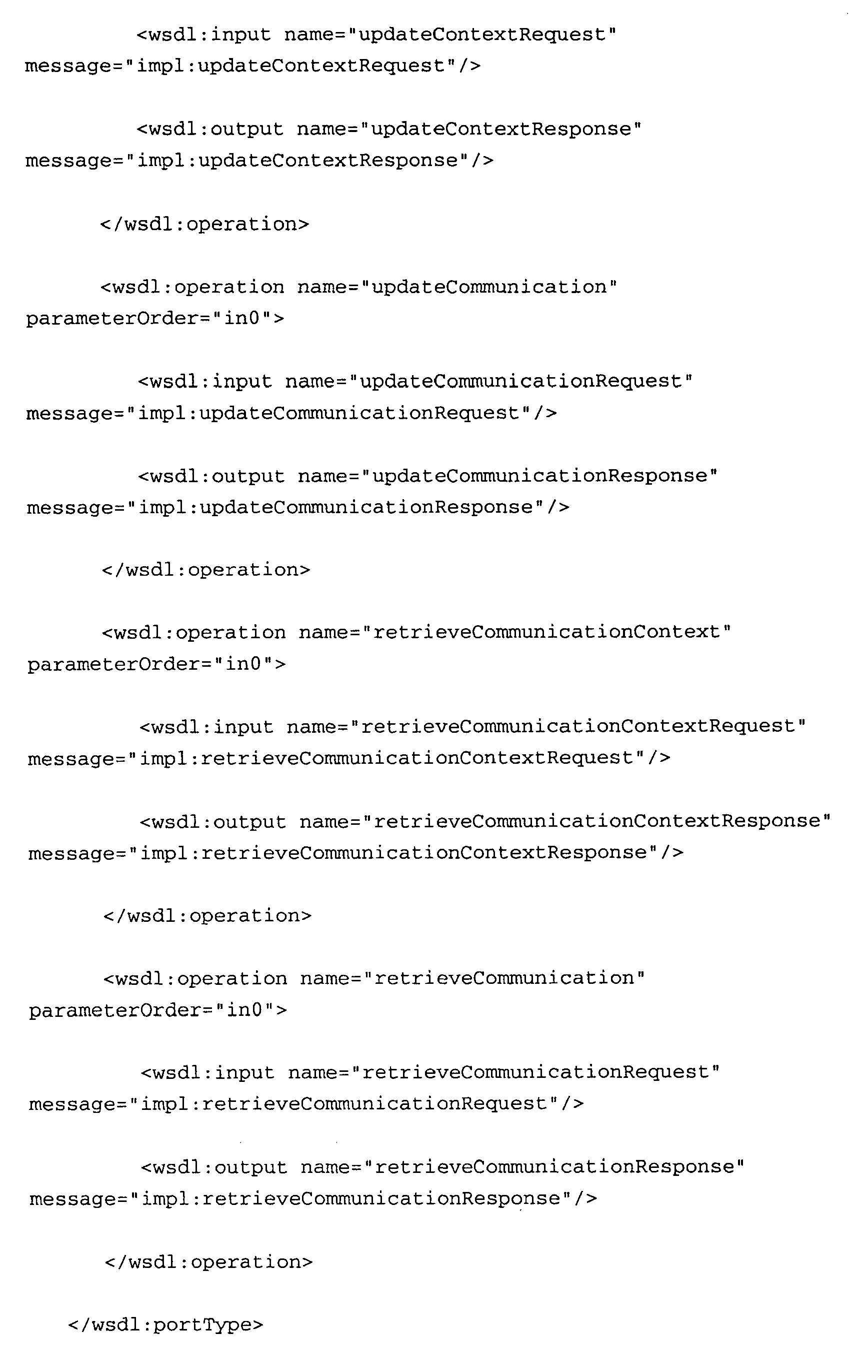

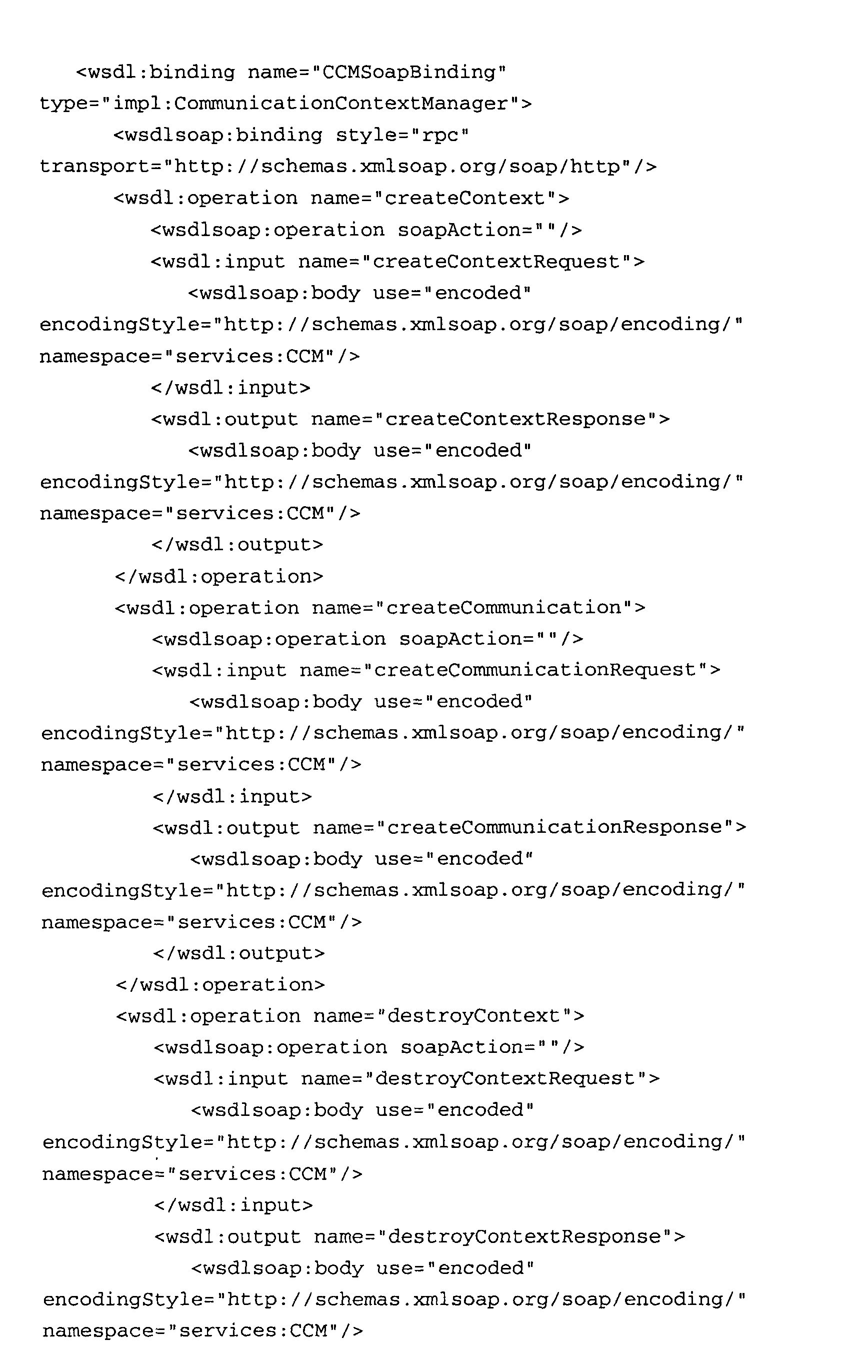

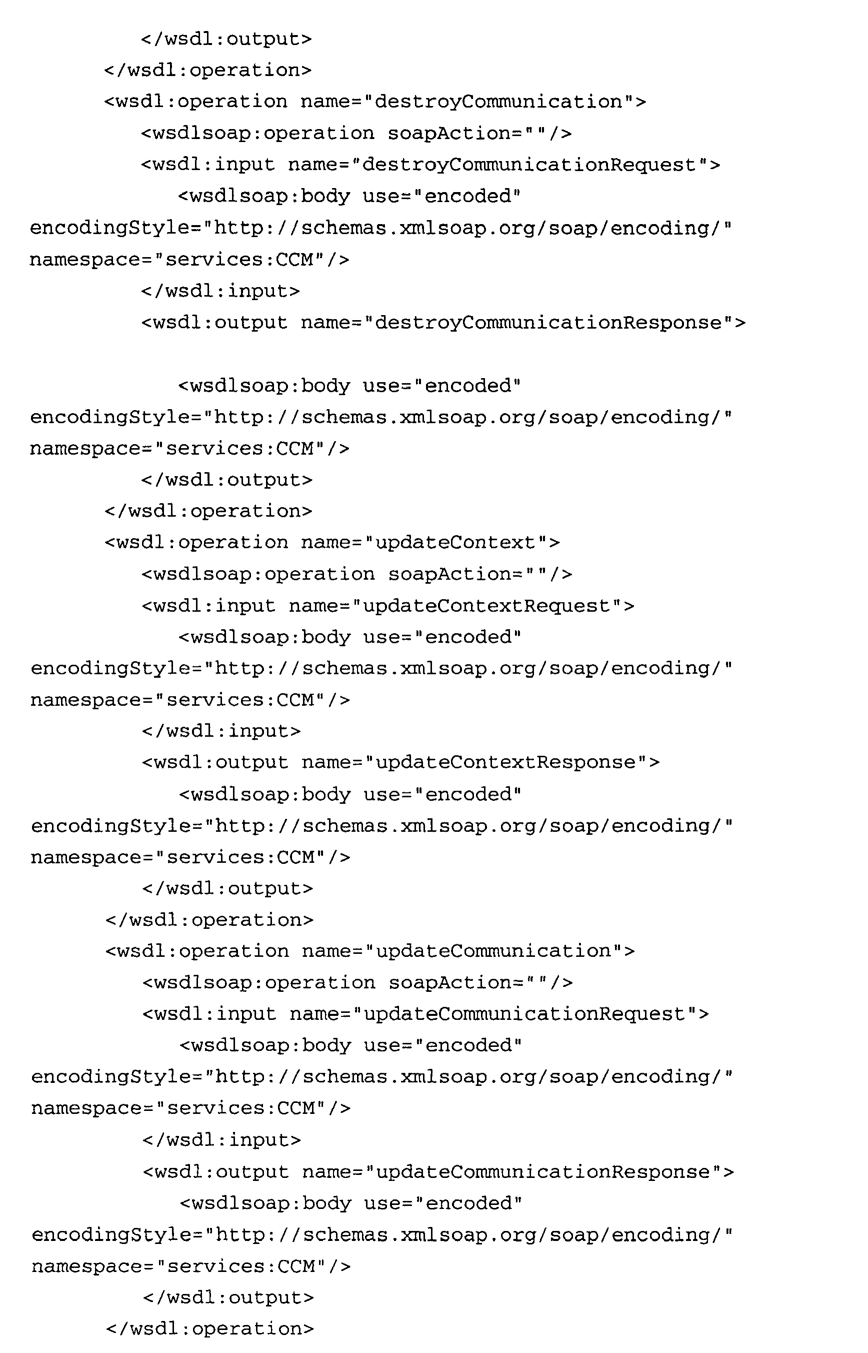

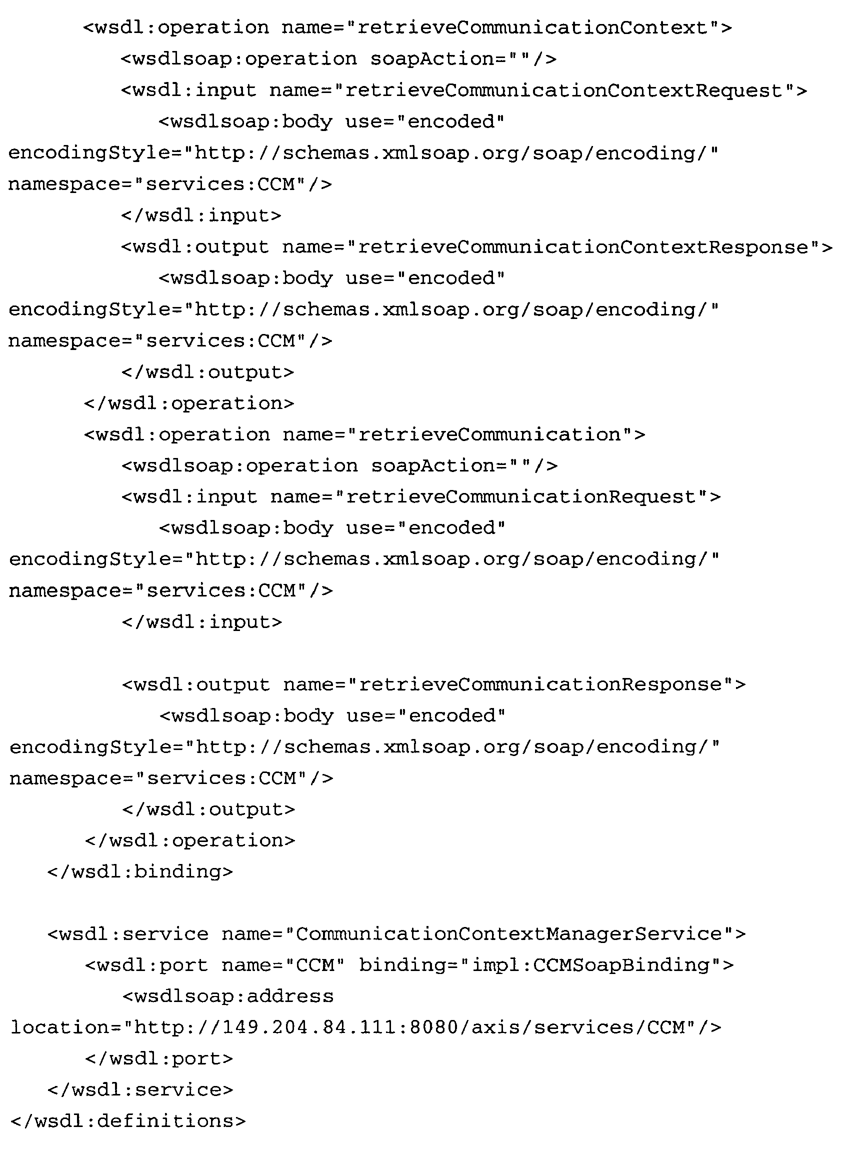

This is only an example for an implementation. Instead of the interlinked (relational) object structure various other data structures are suited for representing threads. From a theoretical standpoint, sited presentations might also be a limited set of (recognizable) acyclic graphs like Mazurkiewicz traces, for a definition see e.g. On Recognizable Stable Trace Languages, Jean-François Husson and Rémi Morin. These structures have several advantages as they are recognizable by finite automata or they are representable by sets of strings. Indeed each event schedule capable of expressing the duality of time and information like Chu space representations is suited as data structure. For a concrete presentation as Kripke structures as lattices of a complete partial Boolean algebra etc. see e.g. Concurrent Kripke Structures, Vineet Gupta.

## Claims

1. A network-assisted communication method comprising:
- establishing a communication in a telecommunication network;
- capturing an identified communication contribution; and
- presenting and storing said communication contribution,
**characterized in that** the method further comprises the steps of
- associating the established communication with a content of the captured communication contribution,
- associating references to related communications to the established communication.

2. The network-assisted communication method according to claim 1,
**characterized in that** it comprises the further step of
- transcribing the captured communication contribution.

3. The network-assisted communication method according to claim 1,
**characterized in that** it comprises the further step of
- arranging and presenting the established communications as a history of personal communications, in the following called thread.

4. The network-assisted communication method according to claim 3,
**characterized in that** it comprises the further step of
- associating or synchronizing multiple threads.

5. The network-assisted communication method according to claim 1,
**characterized in that** the communication is associated with a type, the type describing at least one of used media, used devices, used network resources, participants.

6. The network-assisted communication method according to claim 1,
**characterized in that** a communication is associated with a request, the request describing expected follow up communication.

7. The network-assisted communication method according to claim 5,
**characterized in that** the communication is also associated with a grant, the grant describing at least one of resource dispatching, or billing.

8. A telecommunication service for network-assisted communication, the service comprising capturing means for capturing and storing an identified communication contribution for an established communication in a telecommunication network and presentation means for presenting said communication contribution,
**characterized by** further comprising organization means for associating the established communication with the captured communication contribution, and associating references to related communications to the established communication.

9. A server in a telecommunication network that is **characterized by** comprising means for providing the service according to claim 8.

10. A terminal device in a telecommunication network providing a network-assisted communication, the terminal device comprising capturing means for capturing an identified communication contribution for an established communication and presentation means for presenting said communication contribution, **characterized by** further comprising organization means for associating the established communication with the captured communication contribution, associating references to related communications to the established communication, and retrieval means for retrieving communication information using associated communication contributions.

11. A computer software product that is adapted to perform the network-assisted communication method according to claim 1.

## Amended claims

### Amended claims in accordance with Rule 86(2) EPC.

**1.** A network-assisted communication method comprising:
- establishing a communication in a telecommunication network;
- capturing an identified communication contribution; and
- presenting and storing said communication contribution,
**characterized in that** the method further comprises the steps of
- associating the established communication with a content of the captured communication contribution,
- associating references to related communications to the established communication.

**2.** The network-assisted communication method according to claim 1, **characterized in that** it comprises the further step of
- transcribing the captured communication contribution.

**3.** The network-assisted communication method according to claim 1,
**characterized in that** it comprises the further step of
- arranging and presenting the established communications as a history of personal communications, in the following called thread.

**4.** The network-assisted communication method according to claim 3, **characterized in that** it comprises the further step of
- associating or synchronizing multiple threads.

**5.** The network-assisted communication method according to claim 1, **characterized in that** the communication is associated with a type, the type describing at least one of used media, used devices, used network resources, participants.

**6.** The network-assisted communication method according to claim 1, **characterized in that** a communication is associated with a request, the request describing expected follow up communication.

**7.** The network-assisted communication method according to claim 5, **characterized in that** the communication is also associated with a grant, the grant describing at least one of resource dispatching, or billing.

**8.** A server in a telecommunication network comprising means for providing a telecommunication service for network-assisted communication, the server comprising capturing means for capturing and storing an identified communication contribution for an established communication in a telecommunication network, **characterized by** further comprising organization means for associating the established communication with the captured communication contribution, and associating references to related communications to the established communication.

**9.** A terminal device for use in a telecommunication network providing a network-assisted communication, the terminal device comprising capturing means for capturing an identified communicotion contribution for an established communication and presentation means for presenting said communication contribution, **characterized by** further comprising
- organization means for associating the established communication with the captured communication contribution, associating references to related communications to the established communication, and
- retrieval means for retrieving communication information using associated communication contributions.

**10.** A computer software product that is adopted to perform the network-assisted communication method according to claim 1.
